# EUROPEAN PATENT APPLICATION

(11) **EP 2 302 916 A2**
(43) Date of publication of application: **30.03.2011**
(21) Application number: 10251571.5
(22) Date of filing: 10.09.2010
(51) Int. Cl.: H04N 5/445

(54) **Apparatus and method for producing an EPG**

(30) Priority: 25.09.2009 GB 0916903
(71) Applicant: Sony Europe (Belgium) NV, 1840 Londerzeel (BE)
(72) Inventor: Grad, Joel, 4280 Trognee (BE)
(74) Representative: Smith, Samuel Leonard

(57) **Abstract**

The present invention relates to an apparatus and method for producing an EPG from program information in an EPG database for a plurality of channels. The EPG displays items relating to the programs available on a plurality of channels at a specified time. When the specified time is changed, the EPG updates the items corresponding to channels on which the available program is not the same at the newly specified time as at the previously specified time.

## Description

The present invention relates to an apparatus and method for producing an EPG from program information in an EPG database for a plurality of channels. The EPG displays items relating to the programs available on a plurality of channels at a specified time.

Users may now access media provided through various distribution means, such as television and radio broadcasts or via the internet, and an increasing number of channels providing media are available on each of these distribution systems. Such channels may be available freely or may require a subscription or individual payments ("on-demand" services) to allow the user to access them.

Increasingly, media is distributed with additional information regarding the programming schedule of media that will be available via a particular channel at particular times. Such information usually comprises the start and end times of a particular program on a particular channel and the name of the program. However, further information, such as a brief synopsis of the program may also be included. It is also possible to transmit sample images or videos of the program with this scheduling data.

Users may access the various channels of media via different means, such as via a television or computer or mobile handset. Conventionally, such apparatuses have been developed to provide access to the scheduling data to the user via an Electronic Program Guide (EPG). Such EPGs conventionally display scheduling information over a fixed period of time for a selection of channels. The EPG can be manipulated to show information about programs available during that period of time and on those channels, or to allow a user to select a channel to view.

However, the growing number of sources of media channels and the growing number of channels available from the different sources has resulted in EPGs which are difficult to use and may be confusing to the user. As a result, it is often difficult to find relevant programming or to find and access programming that a user knows exists.

There is a need for an improved apparatus for producing an EPG from program information in an EPG database for a plurality of channels. The present invention aims to at least partly address this need and the above-mentioned problems.

According to the invention, there is provided a method for producing an EPG from an EPG database for a plurality of channels, the method comprising the steps of: output display data for instructing a display unit to display program information items in an array, each program information item corresponding to a program available on a different one of the plurality of channels at a first time, in an array; accepting user input to select a second time; identifying program information, from the EPG database, for the programs available at the second time on the plurality of channels; judging whether a program available at the first time on a channel in the subset of channels is the same as the program available at the second time on the channel; and only updating data in the display data corresponding to a program information item for a channel for which the judging unit judges that the program available at the first time is not the same as the program available at the second time.

According to the invention there is provided an apparatus for producing an EPG from program information in an EPG database for a plurality of channels, the apparatus comprising: a control unit configured to output display data for instructing a display unit to display program information items, each program information item corresponding to a program available on a different one of the plurality of channels at a first time, in an array and the display data including program information data for respective program information items; a time selection unit comprising a user input interface to allow a user to specify a second time; a program information identification unit, configured to identify program information, from the EPG database, for the programs available at the second time on the plurality of channels; and a judging unit for judging whether a program available at the first time on a channel of the plurality of channels is the same as the program available at the second time on the channel; wherein the control unit further comprises a display information updating unit configured to update program information data only for a channel for which the judging unit judges that the program available at the first time is not the same as the program available at the second time.

According to this embodiment of the invention, an EPG may be provided which is intuitive for a user to understand. The user is presented with an array of program information items via the display unit. The program information items correspond to programs available on different channels at the first time. When the user selects a second time, the apparatus for producing the EPG identifies the channels for which a different program will be available at the second time, compared with the first time. The program information items in the EPG array corresponding to those channels are then updated. That is, only the program information items corresponding to the identified channels, for which a different program will be available at the second time, are updated. The user can therefore easily identify the channels on which the program available is different at the second time. This provides a better EPG experience to the user compared with prior art systems which simply reproduce scheduling data for a given time, updating all channels together whether they need to be or not.

The program information items may comprise a still image and/or a moving image and/or text. In preferred embodiments, images are used for the program information items, as this provides an intuitive interface for the user.

The array may be an array of visual tiles, each tile corresponding to a program information item for one of the plurality of channels. In preferred embodiments, the channels represented by each tile remains the same whilst the time selected is changed. This provides consistency in the EPG interface which makes the EPG easier to use for a user.

In preferred embodiments the control unit is further configured to output display data for instructing said display unit to highlight a program information item corresponding to said program information data for said channel which is updated by said display information updating unit. By highlighting program information items which have been updated, the channels on which programming has changed are emphasised to the user. The highlighting provides visual indicia to the user, to help them identify the channels on which a different program is available at the newly selected time. The user can therefore quickly assess the changes in programming. This assessment can be difficult in the absence of highlighting, especially in the case of moving images being used as program information items. This is because it can be difficult to identify when a program information item has changed, rather than there being a change in the moving image of the same program information item. The highlighting may take any suitable form, such as the provision of a border or some form of animation.

Preferably, the display data comprises data for instructing said display unit to highlight said program information item by animating the program information item corresponding to the program available at the first time to move out of said array and animating the program information item corresponding to the program available at the second time to move into said array. Preferably, the program information item for the first time is moved forwards from the array to a vanishing point, whilst the program information item for the second time is moved forwards into the array, from a starting point behind the array. This form of animation is especially intuitive to a user because it gives the impression of navigating a 'timeline' comprising layers of program information items.

The time selection unit may comprises an automatic selection unit for selecting the second time according to a predefined heuristic. This feature may allow automatic navigation through the EPG - for example previewing programming available at the start of every hour. Alternatively, if the data displayed by the EPG becomes out of date, for example a program on a channel finishes whilst the EPG is being viewed for the present time, the EPG may be updated automatically to show the correct information for that channel.

The judging unit may be configured to judge that the program available at the first time is different to the program available at the second time for the channel if the program information for the first time is different to the program information for the second time for the channel.

The display information updating unit may be configured to replace program information data, which corresponds to the channel for which the judging unit judges that the program available at the first time is not the same as the program available at the second time, with program information data corresponding to the program available on the channel at the second time. Updating the EPG in this way is intuitive for a user to understand, especially when the previous and replacement program information items are positioned at the same point in the array.

The display information updating unit may be configured to replace program information data, which corresponds to the channel for which the judging unit judges that the program available at the first time is not the same as the program available at the second time because there is no program available at the second time, with program information data corresponding to a program available on another channel at the second time, wherein program information data for a program item available on the another channel was not previously present in the display data. This overcomes the problem of what to display in the EPG if a channel has no programming at a selected time. By replacing the program information item with a program information item for another channel, the user is provided with information about available programming at the selected time.

The display information updating unit may be configured to replace program information data, which corresponds to the channel for which the judging unit judges that the program available at the first time is not the same as the program available at the second time because there is no program available at the second time, with program information data indicating that no program is available on the channel at the second time. This is an alternative way to overcome the problem of what to display in the EPG if a channel has no programming at a selected time. By replacing the program information item with an item indicating the channel is not broadcasting, the user is made aware of when particular channels are available.

Preferably, the display data includes instruction data for the display unit to display the program information item, corresponding to the replacement program information data, in the same position in the array as the program information item being replaced. This avoids rearranging program information items which are not being updated, avoiding confusion on the part of the user. Further, this method of updating reinforces the impression of a particular position in the array corresponding to a particular channel, which is helpful to the user.

The apparatus may further comprise a preference determining unit, for determining channels for which data of program information items are included in the display data. This allows the apparatus to present a customised EPG, for example based on channels the user either wants to see in the EPG, through a pre-defined preference, or by providing an EPG based on frequently viewed channels.

The apparatus may be embodied within a television set, a computer display device, a mobile telephone or any other suitable device.

The method of the present invention may also be adapted to implement the optional features of the apparatus of the present invention, which are described above.

According to a further aspect of the invention, there is provided a computer program capable of execution by an apparatus for producing an EPG from an EPG database for a plurality of channels, the computer program being arranged, on execution, to cause the apparatus to perform a method according to the method of the present invention described above.

A storage medium may store the computer program.

In order that the present invention may more readily be understood, the following description is given, by way of example only, with reference to the accompanying drawings, in which;
Figure 1 is a schematic diagram of a system comprising an apparatus for producing an EPG according to an embodiment of the present invention;
Figure 2 is a schematic representation of an EPG produced according to the present invention;
Figure 3 is a schematic representation of an alternative EPG produced according to the present invention.
Figure 4 shows representations of devices on which and EPG may be shown. Figure 4a shows a television set, Figure 4b shows a computer and Figure 4c shows a mobile telephone.

Entertainment systems, such as a television, conventionally allow access to an EPG via a display screen. A user may interact with the EPG, for example using remote control, to access scheduling and program information for media being provided on various channels accessible via the entertainment system.

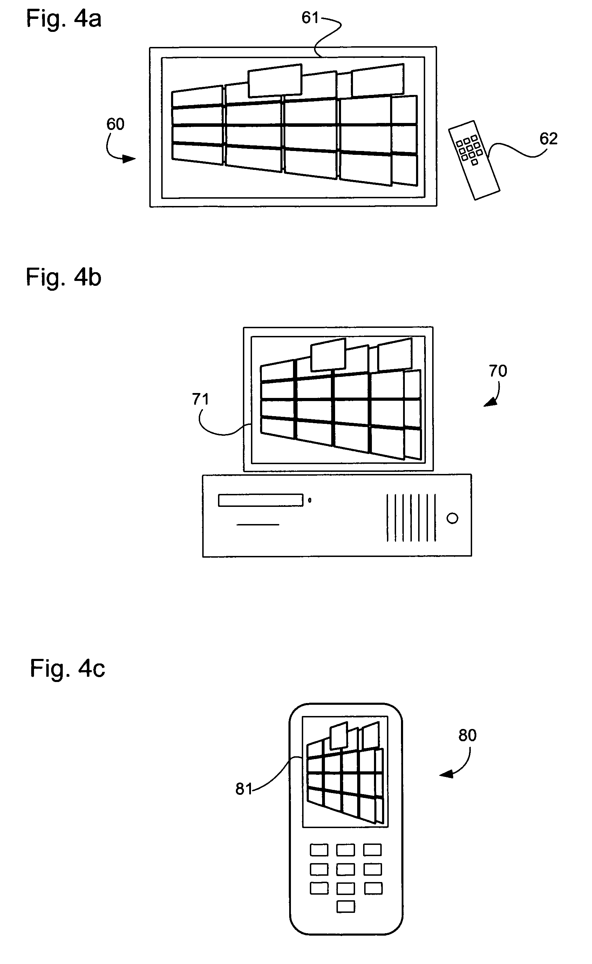

The present invention relates to an apparatus for producing an EPG for such an entertainment system. The following discussion of the invention makes particular references to an EPG provided on a television set. As shown in Fig.4a, a television set 60 may show an EPG on a screen 61. The television may be controlled via a remote control 62. However, it will be understood that the invention can be implemented on any other suitable entertainment device, such as a computer or mobile phone or other portable entertainment device. Figure 4b shows a computer 70 which may display an EPG on a screen 71. Figure 4c shows a mobile telephone 80 which may display an EPG on a screen 81.

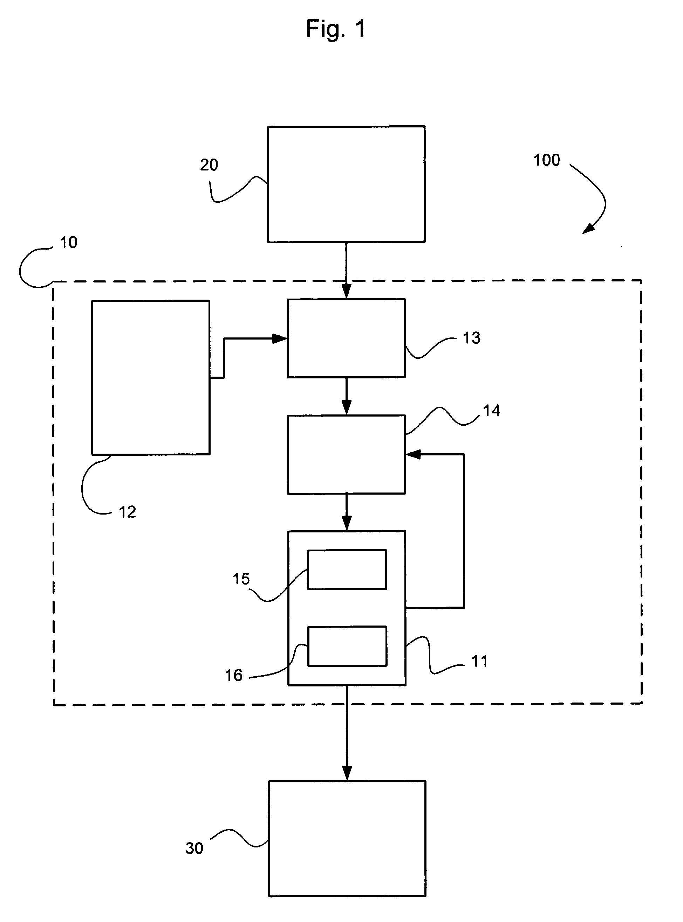

Fig. 1 shows a system 100, which may be embodied as a television set. The system comprises an apparatus for producing an EPG 10, an EPG database 20, and a display device 30. In the embodiment of Figure 1, the apparatus for producing an EPG accepts program information from the EPG database as an input and provides display data as an output to the display unit, for instructing the display unit to display program information items in an EPG.

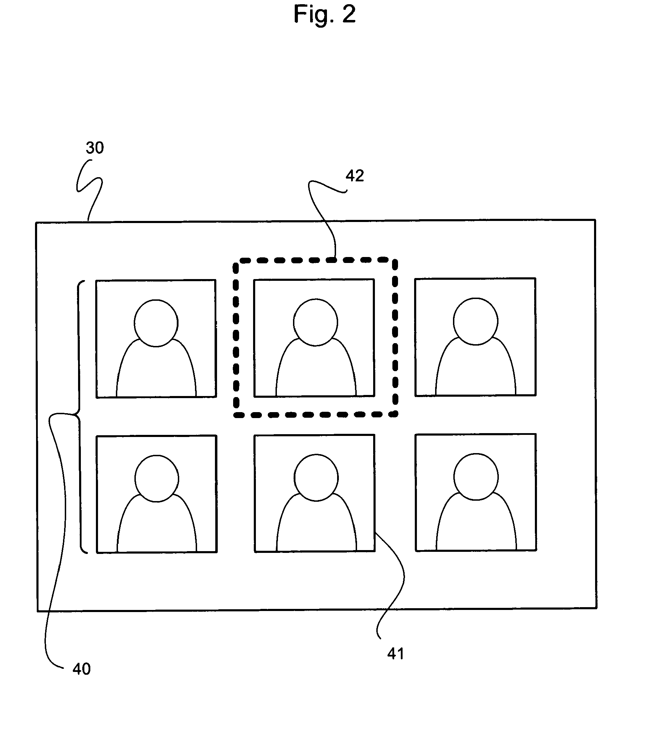

The apparatus for producing an EPG comprises a control unit 11, which is configured to output display data for instructing the display device 30 to display program information items. For example, Figure 2 shows an example of an EPG that may be displayed on the display device 30. The EPG comprises an array 40 of six program information items 41, arranged in two rows and three columns. However, the number of rows or columns in the array 40 is not limited by the invention. The control unit 11 is configured to output display data instructing the display unit 30 to display the program information items 41, which each correspond to a program available on a different one of the plurality of channels at a selected time. The program information items 41 are arranged in an array and may present program information data for the programs available on the channels at the selected time. The program information items 41 may not provide all the program information data available. For example, the program information items 41 may preferentially show a picture representing the program available, as shown in Fig. 2, whilst synoptic information or start and end times are not shown. Such information may be further accessed via further manipulation of the EPG.

The apparatus for producing an EPG 10 further comprises a time selection unit 12 that comprises a user input interface to allow a user to specify a time. The user input interface may be provided by any suitable means, for example accepting input provided via a remote control or via a touch screen interface. The time selection unit 12 may also be configured to automatically select a time. For example, when the EPG is first accessed, the time selection unit may be configured to select a time that corresponds to the present time (i.e. the time of access). Alternatively, the time selection unit may be configured to remember the last time selected when the EPG was previously accessed. Further, if the selected time becomes a time in the past (that is, the selected time passes whilst the EPG is being viewed), the time selection unit 12 may be configured to select a new time, for example the present time.

The apparatus for producing an EPG 10 further comprises a program information identification unit 13. The program information identification unit 13 accepts the time selected by the time selection unit 12 as an input. The program information identification unit 13 also has access to the EPG database 20. When the program information identification unit 13 receives a time from the time selection unit 12, it identifies program information from the EPG database 20, corresponding to programs available at the-selected time from the information available in the EPG database 20.

The EPG database 20 may be populated from data carried in Service Information in Digital Television transmissions. For DVB broadcasts such information may be in the Event Information Table (EIT). EIT may be carried some or all of the broadcast channels (services) on one or more channel (services) known as cross-carried EPG data. Present/Following EPG data may also be broadcast for now and next available programs (events). This can be more accurate as it is updated more frequently and may also be used in the EPG database 20 of the present invention. Alternatively the EPG database 20 may be populated by a service provider using an alternative network connection to the broadcast network (e.g. an internet connection). In some embodiments thumbnails moving video clips corresponding to scheduled programs may be provided via the alternative network connection and identified by event identifiers corresponding to those in broadcast EPG data in order to relate two or more sources of data to one another. Alternative identifiers are possible. Thumbnails and video clips may also be delivered via the broadcast network.

The program information identified by the program information identification unit 13 is provided to a judging unit 14. Judging unit 14 is configured to judge whether programs available on the various channels at the time selected via the time selection unit 12 differ from the programs available on those channels at the previously selected time. The judging unit 14 may perform this comparison by comparing the program information for a channel at the selected time with the program information for the channel at the previously selected time. In the embodiment of Figure 1, the judging unit 14 performs this comparison by accepting an input from the control unit 11, providing the program information for the channels at the previously selected time. However, the judging unit 14 may alternatively comprise a memory that retains the program information for the previously selected time. The information in that memory could be used to perform the comparison to establish whether the programs available on the various channels have changed. Once the judging operation has been performed, the memory may be updated to retain the program information for the most recently selected time.

The results of the comparison made by the judging unit 14, are provided to control unit 11. The control unit 11 comprises an information updating unit 15. The information updating unit 15 updates the display data being output to the display 30, based on the output of the judging unit. When the program available on a particular channel is judged by the judging unit 14 to have changed at the newly selected time, the display information updating unit 15 updates the display data output to the display 30. That is, only the display data related to the channel for which the program available has changed, is updated

The display data may be updated to contain information about the program available on the channel at the newly selected time. Preferably, program information items 41 corresponding to programs available on the same channel (but at different times) are displayed on the display device 30 at the same position in the array 40. However, there may be certain circumstances in which there is no program available at the second time on a particular channel. In those circumstances, the display data may be updated so that the display device 30 shows a program information item 41 indicating that no program is available, or alternatively to show a program information item 41 for a different channel.

The control unit 11 further comprises a preference determining unit 16, for determining channels for which data of program information items 41 are included in the display data. Usually, the display data provided to the display device 30 by the control unit 11, instructs the display device 30 to display program information items for a sub-set of all the channels for which program information is available in the EPG database 20. Although many channels of media are available to users, users access certain channels much more frequently, according to their preferences. As such, a user can find it unhelpful and unwieldy for an EPG to provide information about channels that the user does not have any interest in.

Therefore, the control unit 11 may be configured to output display data instructing the display device 30 to display program information items 41 for only a subset of all the channels available. The subset of channels is determined by the preference determining unit 16. The preference determining unit 16 may be periodically updated with the user's preferred channels. For example, the user's preferred channels may be determined according to the user's viewing habits (i.e. based on the frequency of viewing particular channels), or a predefined preference list provided by the user or any other heuristic. The user's preferences may also be determined for a particular category, such as sport or news, and this information may also be used by the apparatus for producing the EPG 10. For instance, apparatus 10 may produce an EPG capable offering the option to view program information items 41 for channels in a particular category, and those program information items 41 may be arranged according to the user's preferences within that category.

In the case where the display device 30 does not display program information items 41 for all available channels, and there is no program available on a particular channel at a newly selected time, the control unit 11 may be configured to provide display data instructing the display device 30 to display a program information item 41 for a program available on a channel which was not previously represented in the array 40.

Apparatus may be configured to detect absence of information for a particular channel at a particular time to determine that no program is available. Pre-stored text such as "closedown" may be compared with information in the EPG database to determine that no program is available. Other metadata may be signalled in TV transmissions and used to detect that that no program is available. For example, a "running status" may be broadcast in Service Information which indicates that a channel (Service) is (or is not) currently on air.

During operation, when a user accesses the EPG via display unit 30, they are presented with an array 40 of program information items 41 corresponding to a first time. As previously discussed, the first time may correspond to the present time or the last time selected when the EPG was last accessed. Preferably, the program information items 41 are presented as visual tiles in the array 40. Each tile may contain text or a still or moving image representative of the program available on a channel at the selected time.

The user may then select a second time, which is the time of interest. The second time may be input to the entertainment system 100 via any suitable means, such as a remote control, keypad or touch screen. The time may be input in any manner, for example by directly entering the time using numbers on a remote control, or by a further interaction with the EPG.

The second time input by the user is received by the time selection unit 12 of the apparatus for producing the EPG 10. As described above, the apparatus for producing an EPG 10 proceeds to retrieve program information data and update the data being sent to the display device 30 to produce the EPG for the second time.

For programs that are available at both the first and second times on a channel (i.e. a program which hasn't changed between the first and second time), the program data is preferably not changed and the user will preferably see the same program information items 41 provided at the same position in the array 40 of the EPG.

If the program available on a particular channel is different at the second time compared to the first time, the user will see the program information item 41 updated. That is, only the program information items 41 corresponding to channels for which a different program is available at the second time, compared to the first time, are updated. However, it can be difficult to identify program information items that have been updated, especially in the case of a program information item 41 being a moving image. This is because it can be difficult to distinguish between a moving image which has changed itself, compared to a moving image which has been replaced by a different moving image. Therefore, preferably the control unit 11 of the apparatus for producing an EPG 10 is configured to include data in the display data to instruct the display device 30 to highlight program information items 41 which have been updated. The particular form of highlighting may vary.

For example, in the embodiment of Figure 2, a program information item 41, in array 40, is highlighted by the provision of a border 42 to the program information item 41. The provision of the border 42 highlights a program information item 41 that has been updated. The border 42 may persist until a new time is selected, or may fade or disappear after a predetermined length of time. The border 42 itself may be any suitable shape or pattern, or have any suitable decoration. If program information items 41 for several channels are changed, then each program information item 41 that changes is provided with a border 42.

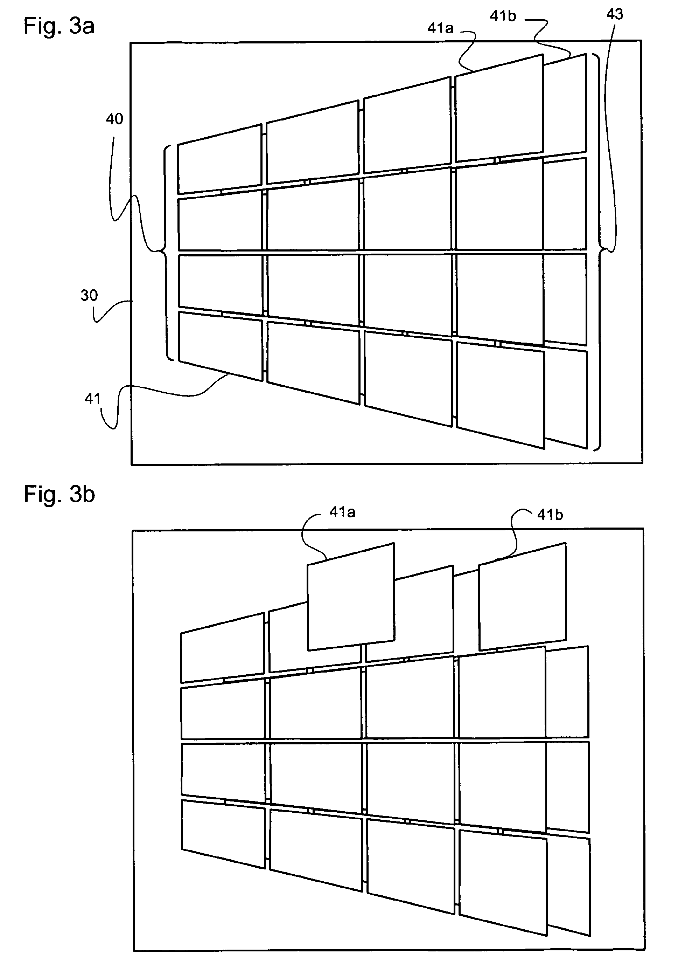

Figure 3a shows an example of an alternative EPG produced according to the present invention. The array 40 of program information items 41 is provided in a perspective view. Further, the EPG has a second array 43, also displayed in perspective view, behind the first array 40. It will be appreciated that providing a perspective view for the arrays in this embodiment is optional. The second array 43 has the same form as the first array 40, but may contain items or tiles that are not program information items. Alternatively, the second array 43 may contain program information items 41 corresponding to subsequent programs available on the channels represented at the same position as in the first array 40. That is, the first array 40 may show program information items corresponding to programs available at a selected time on a series of channels, whilst the second array 43 represents program information items corresponding to programs that are next available after the selected time on the same series of channels.

The items of the second array 43 may not be fully visible, as they may be obscured by the first array 40.

When a second time is selected, and the program available on a particular channel differs at the second time from the program available at the first time, the change of program is highlighted by animating the arrays 40 and 43. Figure 3b shows the animation of the EPG of Figure 3a in progress. A program information item 41a corresponding to a program available at the first time, but not at the second time, is animated to move forwards from the first array 40 and to subsequently vanish. Alternatively, the program information item 41 a may be animated to move off the screen. Figure 3b shows the program information item 41 a displaced away from its original position in the array, before it has vanished. Also, the item 41b in the second array 43 for the same channel at the same relative position is animated to move forward into the first array 40. Figure 3b shows item 41b as it is moved from the second array 43 to the first array 40. A new item is displayed at the position vacated in the second array 43 by item 41b, this is not shown in Figure 3b. In contrast, no such animation occurs for program items corresponding to channels for which the program does not change between the first and second times.

If the item 41b starting in the second array 43 was previously not a program information item 41, it is updated to be a program information item 41, corresponding to the program available on the channel at the second time, during the animation.

If the item 41b starting in the second array 43 originally shows a program information item 41 for the subsequent program on the channel after the first time, it may be that the second time does not correspond to a time at which the subsequent program is available. That is, there may be a large difference between the first and second times, but the programs available on the channel may be relatively short. In that case, during the animation, the program information item 41b starting in the second array 43 may be updated to show the program information item 41 corresponding the program available at the second time.

In either case, as a result, program information items corresponding to the newly selected time are shown in the first array.

In the case of the item 41b starting in the second array 43 originally showing the program information item 41 for the subsequent program on the channel after the first time, the animation may be further extended. In particular, the animation may be further extended in the case when the second time does not correspond to a time at which the subsequent program is available. The animation may show program information items 41 for all the intermediate programs, available between the first time and the second time, as appearing in the second array 43and moving forwards, through the position of the first array 40, before moving to the vanishing point or off the screen.

In this case, instead of updating the program information item 41b starting in the second array 43 to be the program information item corresponding to the program available on the channel at the second time, the animation may show sequentially the program information items 41 for each program between the first and second times appearing in the second array 43, moving from the second array 43 to the first array 40 and then to the vanishing point. This allows the user to be provided with an indication of the programs that are available between the first and second times.

In this embodiment, the program information identification unit 13 is configured to identify program information for all the programs available between the first and second times. This program information is provided to the control unit 11 for incorporation into the output display data for instructing the display device 30 to produce the EPG. That is, the control unit 11 may be further configured to output display data for instructing the display device 30 to highlight program information items 41 which are updated by displaying program information items for programs available on the channel at intermediate times, between the first and second times, whilst updating the program information item 41 in the first array.

In some embodiments the EPG may be produced on the display of a remote control device for operating a television receiver. The remote control device may be connected to a television device wirelessly for example by Bluetooth or wireless Ethernet protocols. Some or all of the EPG database may be communicated to a memory and processor of the remote control device and the remote control device may be configured to produce the EPG on its display. In alternative embodiments, the remote control device may run software on its processor which is comparable of receiving instructions or raw data in a structured form such as XML from the television receiver device or other source and to produce the EPG on its display.

## Claims

1. An apparatus for producing an EPG from program information in an EPG database for a plurality of channels, the apparatus comprising:
a control unit configured to output display data for instructing a display unit to display program information items, each program information item corresponding to a program available on a different one of the plurality of channels at a first time, in an array and the display data including program information data for respective program information items;
a time selection unit comprising a user input interface to allow a user to specify a second time;
a program information identification unit, configured to identify program information, from the EPG database, for the programs available at the second time on the plurality of channels; and
a judging unit for judging whether a program available at the first time on a channel of the plurality of channels is the same as the program available at the second time on the channel; wherein
the control unit further comprises a display information updating unit configured to update program information data only for a channel for which the judging unit judges that the program available at the first time is not the same as the program available at the second time.

2. An apparatus according to claim 1, wherein each of said program information items comprise a still image and/or a moving image and/or text.

3. An apparatus according to claim 1 or claim 2, wherein said array is an array of visual tiles, each tile corresponding to a program information item for one of the plurality of channels.

4. An apparatus according to any one of the previous claims, wherein said control unit is further configured to output display data for instructing said display unit to highlight a program information item corresponding to said program information data for said channel which is updated by said display information updating unit,
and optionally wherein said display data comprises data for instructing said display unit to highlight said program information item by animating the program information item corresponding to the program available at the first time to move out of said array and animating the program information item corresponding to the program available at the second time to move into said array.

5. An apparatus according to any one of the previous claims wherein the time selection unit comprises an automatic selection unit for selecting the second time according to a predefined heuristic.

6. An apparatus according to any one of the previous claims, wherein said judging unit is configured to judge that the program available at the first time is different to the program available at the second time for the channel if the program information for the first time is different to the program information for the second time for the channel.

7. An apparatus according to any one of the previous claims, wherein the display information updating unit is configured to replace program information data, which corresponds to the channel for which the judging unit judges that the program available at the first time is not the same as the program available at the second time, with program information data corresponding to the program available on the channel at the second time.

8. An apparatus according to any one of the previous claims, wherein the display information updating unit is configured to replace program information data, which corresponds to the channel for which the judging unit judges that the program available at the first time is not the same as the program available at the second time because there is no program available at the second time, with program information data corresponding to a program available on another channel at the second time, wherein program information data for a program item available on the another channel was not previously present in the display data.

9. An apparatus according to any one of the previous claims, wherein the display information updating unit is configured to replace program information data, which corresponds to the channel for which the judging unit judges that the program available at the first time is not the same as the program available at the second time because there is no program available at the second time, with program information data indicating that no program is available on the channel at the second time.

10. An apparatus according to any one of claims 7 to 9, wherein the display data includes instruction data for the display unit to display the program information item, corresponding to the replacement program information data, in the same position in the array as the program information item being replaced.

11. An apparatus according to any one of the previous claims, further comprising:
a preference determining unit, for determining channels for which data of program information items are included in the display data.

12. A television set, computer display device or mobile telephone comprising the apparatus according to any one of the previous claims.

13. A method for producing an EPG from an EPG database for a plurality of channels, the method comprising the steps of:
output display data for instructing a display unit to display program information items in an array, each program information item corresponding to a program available on a different one of the plurality of channels at a first time, in an array;
accepting user input to select a second time;
identifying program information, from the EPG database, for the programs available at the second time on the plurality of channels;
judging whether a program available at the first time on a channel in the subset of channels is the same as the program available at the second time on the channel; and
only updating data in the display data corresponding to a program information item for a channel for which the judging unit judges that the program available at the first time is not the same as the program available at the second time.

14. A computer program capable of execution by an apparatus for producing an EPG from an EPG database for a plurality of channels, the computer program being arranged, on execution, to cause the apparatus to perform a method according to claim 13.

15. A storage medium storing a computer program according to claim 14.
